# EUROPÄISCHE PATENTSCHRIFT

(11) **EP 0 770 635 B1**
(45) Veröffentlichungstag und Bekanntmachung des Hinweises auf die Patenterteilung: **27.11.2002**
(21) Anmeldenummer: 96115246.9
(22) Anmeldetag: 23.09.1996
(51) Int. Cl.: C08G 59/06, C08F 283/10, C08J 3/03

(54) **Reaktivverdünnerhaltige Epoxid- und Epoxid-Polyacrylat-Dispersionen, Verfahren zur ihrer Herstellung und ihre Verwendung**
Reactive solvent containing epoxy and epoxy-polyacrylate dispersions, process for their preparation and their use
Dispersions d'époxy et d'époxy-polyacrylate contenant des diluants réactifs, procédé pour leur préparation et leur utilisation

(30) Priorität: 29.09.1995 DE 19536381
(43) Veröffentlichungstag der Anmeldung: 02.05.1997
(73) Patentinhaber: Solutia Germany GmbH & Co. KG, 55252 Mainz-Kastel (DE)
(72) Erfinder: Stengel-Rutkowski, Bernhard, 65207 Wiesbaden (DE); Godau, Claus, 65399 Kiedrich (DE); Pfeil, Armin, Dr., 86916 Kaufering (DE)
(74) Vertreter: Zounek, Nikolai, Dipl.-Ing.

(56) Entgegenhaltungen:
- EP-A- 0 272 595
- EP-A- 0 639 593
- DE-A- 4 405 148
- US-A- 4 315 044
- US-A- 4 399 242

## Beschreibung

Aus der DE-A 36 43 751 sind bereits wäßrige Epoxidharzdispersionen bekannt, die in Gegenwart eines Kondensationsproduktes aus einem aliphatischen Polyol und einer Epoxidverbindung als Emulgator hergestellt werden. Diese wäßrigen Dispersionen enthalten jedoch neben Wasser immer eine gewisse Menge an organischen Lösungsmitteln. In der DE-A 41 28 487 wurde ein Weg beschrieben, wie man diese Menge an organischen Lösungsmitteln noch weiter verringern kann bei gleichzeitiger Verbesserung der Eigenschaften dieser Dispersionen. Dazu wird das Basisharz nicht mehr in Gegenwart des Emulgators kondensiert und flexibilisierend wirkende Polyepoxide als Rohstoffe für das Epoxidharz verwendet; in den Beispielen von DE-A 41 28 487 wird Polypropylenglykoldiglycidyläther eingesetzt.

Diese Dispersionen weisen einen deutlich erniedrigten Lösungsmittelgehalt auf bei verbesserten anwendungstechnischen Eigenschaften. Im Zuge der immer weiter anzustrebenden Minimierung an flüchtigen organischen Komponenten in wäßrigen Anstrichmitteln erweist sich aber selbst der verringerte Lösungsmittelgehalt als problematisch, zudem müssen zur Flexibilisierung des Basisharzes teure Rohstoffe eingesetzt werden, welche zusätzlich negative Auswirkungen auf das Eigenschaftsbild haben können.

Vor allem kalthärtende Systeme wie zum Beispiel für den Korrosions- und Bautenschutz oder solche, welche der forcierten Trocknung unterworfen werden, sind unter dem Gesichtspunkt der Lösungsmittelemission besonders kritisch zu betrachten, da hier nicht wie bei Einbrennsystemen eine thermische Nachverbrennung des Lösungsmittels erfolgen kann.

Eine wesentliche Verbesserung der bestehenden Systeme wäre also ein Bindemittel auf der Basis einer völlig lösungsmittelfreien Dispersion, welches für den Bereich kalthärtender Beschichtungen eingesetzt werden kann.

Die eingesetzten Lösungsmittel dienen in der Regel hauptsächlich als Koaleszenzmittel, die nach dem Verfilmen langsam aus dem Film verdampfen und damit gewerbehygienisch ungünstige Arbeitsbedingungen sowie unerwünschte Emission von organischen Bestandteilen in die Atmosphäre verursachen. Zusätzlich bleiben zwangsläufig Lösungsmittelreste in der Beschichtung, welche deren Eigenschaften nachteilig beeinflussen. Ohne solche Lösungsmittel erhält man jedoch schlechte Verfilmung und Verlauf, was zu trüben, schlecht haftenden Filmen führt.

Daß Reaktivverdünner einen positiven Effekt (Senkung der Viskosität) in konventionellen Epoxidharzformulierungen und wasserverdünnbaren Flüssigharzen haben können, ist dem Fachmann bekannt. Kaum beschrieben ist jedoch ihr Einsatz in Epoxid-Festharz-Dispersionen. In den Patentschriften US-A 4,315,044, US-A 4,399,242 und US-A 4,608,406 wird die Verwendung von C₈-C₈₀-Alkyl-Monoepoxiden in nichtionisch stabilisierten Epoxid-Festharz-Dispersionen für Härtung bei Raumtemperatur oder in der Hitze beschrieben. Diese Reaktivverdünner werden dort in die fertige Dispersion eingerührt und Verbessern die Scherstabilität, die Gefrier-Tau-Stabilität, die Lagerstabilität und den Glanz der Beschichtungen, was aber z.T. nur durch den zusätzlichen Einsatz von Glykolen bzw. Glykoläthern befriedigend erreicht werden kann.

Nicht genannt wird hingegen die Funktion der Reaktivverdünner als Koaleszenzmittel, vor allem wird nicht erwähnt, daß die Zugabe zum Harz vor dem eigentlichen Dispergierprozeß besonders vorteilhaft ist.

Das nachträgliche Zumischen von Stoffen zu einer fertigen, nichtionisch stabilisierten Festharzdispersion gestaltet sich vor allem bei hohen Festkörpern der Dispersionen als sehr umständlich, da unterschiedlich viskose/polare Kornponenten gut miteinander homogenisiert werden müssen, was in größeren Mischaggregaten nur unbefriedigend verläuft. Außerdem kann auf diese Weise nicht ein so hoher Grad der Durchmischung von Harz und Reaktivverdünner erreicht werden, da diese Komponenten in getrennten Micellen vorliegen.

Aufgabe der vorliegenden Erfindung war es, Reaktivverdünner-haltige Epoxid- bzw. Epoxid-Acrylat-Dispersionen herzustellen, welche keine weiteren Koaleszenzmittel mehr benötigen und gleichzeitig deutlich verbesserte Eigenschaften gegenüber herkömmlichen Dispersionen bzw. solchen mit nachträglich zugegebenen Reaktivverdünnern aufweisen.

Überraschenderweise wurde nun gefunden, daß durch den Einsatz von Reaktivverdünnern nach einem speziellen Verfahren, nämlich vor dem Dispergierprozeß, unterschiedliche, immer extrem lösungsmittelarme oder gar lösungsmittelfreie Epoxidharz- oder Epoxid-Polyacrylat-Dispersionen herstellbar sind, welche sich sehr gut zur Raumtemperaturhärtung bzw. forcierten Trocknung eignen und selbst ohne Zusatz weiterer Koaleszenzmittel hervorragende Verfilmung und sehr gute anwendungstechnische Eigenschaften aufweisen.

Gegenstand der Erfindung ist daher ein Verfahren zur Herstellung einer wäßrigen Epoxidharzdispersion (I), in welchem ein Epoxidharz (A) durch Kondensation von Massenanteilen von 50 bis 95 % einer oder mehrerer Epoxidverbindung(en) (A-1) mit mindestens zwei Epoxidgruppen pro Molekül und
5 bis 50 % eines aromatischen Polyols (A-2) bei 100 bis 220 °C in Gegenwart von Kondensationskatalysatoren hergestellt wird,
sowie gegebenenfalls 0 bis 25 %, vorzugsweise 1 bis 10 %, modifizierender Verbindungen (A-3) mit mindestens zwei epoxid-reaktiven Gruppen,
darauf ein Dispergiermittel (B) enthaltend ein Kondensationsprodukt (B-1) aus einem aliphatischen Polyol (B-11) mit einer gewichtsmitderen molaren Masse (M_{w}) von 200 bis 20 000 g/mol und einer Epoxidverbindung (B-12) mit mindestens zwei Epoxidgruppen pro Molekül einhomogenisiert wird und eine wäßrige Dispersion durch portionsweises Zudosieren von Wasser (D) erhalten wird,
dadurch gekennzeichnet, daß vor dem Dispergierschritt ein Verdünnungsmittel (C) enthaltend niedermolekulate flüssige epoxyfunktionelle Verbindungen (C-1) und gegebenenfalls zur radikalischen Polymerisation bzw. Copolymerisation befähigte äthylenisch ungesättigte ansonsten inerte oder gegebenenfalls funktionelle Monomere (C-2) zugesetzt wird, wobei die Verbindungen (C-1) ausgewählt sind aus niedermolekularen Äthern von Glycidylalkohol mit ein- und mehrwertigen Phenolen, alkylsubstituierten Phenolen und ein- und mehrwertigen aliphatischen verzweigten und unverzweigten Alkoholen mit 2 bis 40 Kohlenstoffatomen sowie dem Versaticsäureglycidylester.

Die Erfindung betrifft weiterhin ein Verfahren zur Herstellung einer wäßrigen Epoxidharzdispersion (I), dadurch gekennzeichnet, daß zunächst das Epoxidharz (A) durch Kondensation der Komponenten (A-1), (A-2) und gegebenenfalls (A-3) bei erhöhten Temperaturen in Gegenwart von Kondensationskatalysatoren hergestellt wird, anschließend bei tieferer Temperatur das Verdünnungsmittel (C-1) zugefügt wird, darauf das Dispergiermittel (B) einhomogenisiert wird und eine wäßrige Dispersion durch portionsweises Zudosieren von Wasser (D) erhalten wird.

Die Erfindung betrifft weiterhin ein Verfahren zur Herstellung einer wäßrigen Epoxid-Polyacrylat-Dispersion (I), dadurch gekennzeichnet, daß zunächst das Epoxidharz (A) durch Kondensation der Komponenten (A-1), (A-2) und gegebenenfalls (A-3) bei erhöhten Temperaturen in Gegenwart von Kondensationskatalysatoren hergestellt wird, anschließend bei tieferer Temperatur zumindest eine Teilmenge des Verdünnungsmittels (C) zugefügt wird und gegebenenfalls eine teilweise Reaktion der Monomeren (C-2) mit dem Epoxidharz (A) vollzogen wird, darauf das Dispergiermittel (B) einhomogenisiert wird und eine wäßrige Dispersion durch portionsweises Zudosieren von Wasser (D) erhalten wird, worauf man mit Hilfe eines geeigneten Initiatorsystems und gegebenenfalls unter Zugabe des restlichen Verdünnungsmittels (C) bei geeigneten Temperaturen die Monomeren (C-2) vollständig in eine Polymerdispersion überführt. Die ggf. verwendeten Teilmengen des Verdünnungsmittels können verschiedener Zusammensetzung hinsichtlich Menge und Art der Bestandteile (C-1) und (C-2) sein.

Das erfindungsgemäße Bindemittel wird hergestellt durch Abmischen dieser Dispersion mit einem geeigneten Härtungsmittel (II), ggf. gefolgt von dem Fachmann bekannten Zuschlagstoffen gemäß (III).

Bei den 1,2-Epoxidverbindungen entsprechend (A-1) und (B-12) handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch und/oder heterocyclisch sein und auch Hydroxylgruppen und Polyäthereinheiten aufweisen. Sie können weiterhin solche Substituenten und/oder funktionelle Gruppen enthalten, die unter den Mischungs- oder Reaktionsbedingungen keine störenden Nebenreaktionen verursachen, beispielsweise Alkyl- oder Arylsubstituenten, Äthergruppierungen und ähnliche. Es ist bevorzugt, daß die Epoxidverbindungen gemäß (A-1) und (B-12) unabhängig voneinander ausgewählt sind aus Polyglycidyläthern von mehrwertigen Alkoholen, Phenolen, hydrierten Phenolen und Novolaken sowie Polyglycidylestern von aliphatischen, cycloaliphatischen und aromatischen Polycarbonsäuren mit 2 bis 40 Kohlenstoffatomen mit einem Epoxidgruppengehalt zwischen 300 und 12 000 mmol/kg.

Vorzugsweise handelt es sich dabei um Polyglycidyläther auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidgruppengehalte dieser Epoxidverbindungen liegen vorzugsweise zwischen 500 und 11 000, insbesondere zwischen 2800 und 10 000 mmol/kg (Epoxidäquivalentgewichte zwischen 90 und 2000, insbesondere zwischen 100 und 350 g/mol).

Als mehrwertige Phenole sind beispielsweise zu nennen: Resorcin, Hydrochinon, 2,2-Bis-(4-hydroxyphenyl)-propan (Bisphenol A), Dihydroxydiphenylmethan (Bisphenol F, ggf. Isomerengemische), Tetrabrombisphenol A, 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4-hydroxy-phenyl)-1,1-äthan, 2,2-Bis(4-(2-hydroxypropoxy)phenyl]-propan, Bis-(4-hydroxyphenyl)-1,1-isobutan, 2,2-Bis-(4-hydroxy-3-tert.butylphenyl)-propan, Bis-(2-hydroxynaphthyl)-methan, 1,5-Dihydroxynaphthalin, Tris-(4-hydroxyphenyl)-methan, Bis-(4-hydroxyphenyl-)äther, Bis-(4-hydroxyphenyl-)sulfon u.a. sowie die Halogenierungs- und Hydrierungsprodukte der vorstehend genannten Verbindungen. Bisphenol A ist hierbei besonders bevorzugt.

Als Beispiele für mehrwertige Alkohole seien Äthylenglykol, Diäthylenglykol, Triäthylenglykol, Polyäthylenglykole (n= 1 bis 35), 1,2-Propylenglykol, Polypropylenglykole (n= 1 bis 15), 1,3-Propylenglykol, 1,4-Butandiol, 1,5-Pentandiol, 1,6-Hexandiol, 1,2,6-Hexantriol, Glycerin, Neopentanglykol, 1,4-Dimethylolcyclohexan, Trimethyloläthan, Trimethylolpropan, aber auch Blockcopolymere von Äthylenoxid, Propylenoxid usw., sowie äthoxylierte und propoxylierte Bisphenole wie z.B. propoxyliertes Bisphenol A, genannt. Polyäthylenglykole und Polypropylenglykole (n = 8 - 10) sind hierbei besonders bevorzugt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, oder auch mit sauren Polyestern erhält. Beispiele sind Adipinsäurediglycidylester, Phthalsäurediglycidylester und Hexahydrophthalsäurediglycidylester.

Eine ausführliche Aufzählung geeigneter Epoxidverbindungen findet sich in dem Handbuch "Epoxidverbindungen und Epoxidharze" von A.M. Paquin, Springer Verlag, Berlin 1958, Kapitel IV und in Lee, Neville, "Handbook of Epoxy Resins", McGraw-Hill Book Co., 1967, Kapitel 2. Die genannten Epoxidverbindungen können einzeln oder im Gemisch eingesetzt werden.

Als aromatische Polyole entsprechend (A-2) kommen vorzugsweise die aromatischen OH-gruppenhaltigen Verbindungen in Frage, die vorstehend bei den Komponenten (A-1) und (B-12) beschrieben wurden, also mehrwertige, vorzugsweise zweiwertige ein- und mehrkernige Phenole, deren Halogenierungsprodukte und/oder Novolake. Besonders bevorzugt ist auch hier Bisphenol A.

Bei den modifizierenden Verbindungen gemäß (A-3) handelt es sich um Verbindungen mit mindestens zwei funktionellen Gruppen, welche zur Reaktion mit den Epoxidgruppen der Komponente (A-1) befähigt sind, und welche sich nicht unter den aromatischen Polyolen gemäß (A-2) einordnen lassen. Ihr Einsatz kann erfolgen, um durch gezielte Modifikation wünschenswerte Eigenschaften des Basisharzes (A) einzustellen. Bevorzugt sind die Verbindungen (A-3) ausgewählt aus aliphatischen Polyaminen, Polyoxyalkylenmono- und -diaminen, aliphatischen und aromatischen Polycarbonsäuren mit 2 bis 60 Kohlenstoffatomen, und aliphatischen Polyolen. Hierbei kann es sich um Polyamine (z.B. Äthylendiamin, Diäthylentriamin, Triäthylentetramin, Tetraäthylenpentamin usw.), Polyoxyalkylenoxide mit endständigen Aminogruppen (z.B. die Jeffamine® der Firma TEXACO und Novamin®-Typen), aliphatische und aromatische Polycarbonsäuren mit 2 bis 60 Kohlenstoffatomen (z.B. Maleinsäure, Fumarsäure, Phthalsäure, Bernsteinsäure, dimere und trimere Fettsäuren usw. und deren Anhydride, soweit verfügbar) sowie aliphatische Polyole (z.B. Äthylenglykol, Propylenglykol, Butylenglykol, Polyäthylenglykol, Polypropylenglykol, Trimethylolpropan und -äthan, Neopentylglykol, Glycerin usw.) handeln. Besonders bevorzugt sind dimere Fettsäuren mit einem Gehalt von 20 bis 50 Kohlenstoffatomen und Jeffamine®.

Bei den Polyolen der Komponente (B-1) handelt es sich vorzugsweise um Polyätherpolyole (Polyoxyalkylenglykole) mit gewichtsmittleren molaren Massen (M_{w}; Gelpermeationschromatographie; Polystyrolstandard) von bevorzugt zwischen 600 und 12000, insbesondere 2000 bis 8000 g/mol und OH-Zahlen zweckmäßigerweise von 10 bis 600, bevorzugt 15 bis 120 mg/g. Diese Polyätherpolyole besitzen vorzugsweise nur endständige, primäre OH-Gruppen. Beispielsweise seien hier Blockcopolymere aus Äthylenoxid und Propylenoxid sowie Polyäthylen-, Polypropylen-, Polybutylenglykole genannt, wobei auch Gemische der jeweiligen Polyalkylenglykole eingesetzt werden können. Vorzugsweise werden Polyäthylenglykole verwendet.

Zusätzlich können zum erfindungsgemäßen Dispergiermittel (B-1) auch weitere Dispergiermittel (B-2) anionischer, kationischer und vorzugsweise nichtionischer Art verwendet werden. In Frage kommen Alkylbenzolsulfonate, primäre und sekundäre Alkansulfonate, α-Olefinsulfonate, Alkylsulfate und Alkyläthersulfate als anionische sowie quaternäre Ammoniumverbindungen als kationische Tenside in Frage, wobei die ionischen Gruppen nicht mit den Epoxidgruppen wechselwirken dürfen. Bevorzugt ist aber die Verwendung nichtionischer Tenside wie äthoxylierte oder äth/propoxylierte Alkohole, Oxoalkohole, Alkylphenole (z.B. Arcopal® der Firma Hoechst), Rizinusöle, Ester, Glycerinstearate, Fettsäuren, Fettamine, Fettalkohole, aber auch z.B. Äthylenoxid-Propylenoxid-Blockcopolymere (z.B. Pluronic® der Firma BASF). Auch die speziell zur Dispergierung von Epoxidharzen beschriebenen Emulgatoren können zum Einsatz kommen, wie z.B. aus US 4 423 201 und US 4 446 256 (Produkte aus Polyalkylenglykolen, Diisocyanaten und Bisphenolen), EP 0 497 404 (Produkte aus Alkoxypolyalkylenglykolen, Anhydriden und Alkylenoxiden, Epoxyalkoholen oder Diglycidyläthern), WO 91/10695 (Produkte aus Polyglycidyläthern, bifunktionelle Verbindungen und Alkoxypolyalkylenglykolen), EP 0 109 173 (Produkte aus Polyoxyalkylenpolyaminen und Epoxidharzen) und DE 41 36 943 (Produkte aus Polyalkylenglykolen mit Diisocyanaten und Polyepoxiden).

Als Komponente (C-1), niedermolekulare flüssige epoxyfunktionelle Verbindungen sind zu nennen niedermolekulare Äther von Glycidylalkohol mit ein- und mehrwertigen Phenolen, alkylsubstituierten Phenolen und ein- und mehrwertigen aliphatischen verzweigten und unverzweigten Alkoholen und Estern von verzweigten oder unverzweigten aliphatischen Carbonsäuren mit 2 bis 40 Kohlenstoffatomen, welche u.a. unter dem Begriff Reaktivverdünner bekannt sind, z.B. para-tert.-Butylphenylglycidyläther, n-Butylglycidyläther, Phenylglycidyläther, ortho-Kresylglycidyläther, Butandioldiglycidyläther, Hexandioldiglycidyläther, Neopentylglykoldiglycidyläther, Dimethylolcyclohexandiglycidyläther, 2-Äthylhexylglycidyläther, höhere Alkylglycidyläther usw. (z.B. die Reaktivverdünner der Serie Grilonit® RV der Firma Ems, Epodil® der Firma Anchor oder Eurepox® RV der Firma Schering), Versaticsäureglycidylester (Cardura® E 10 der Firma Shell), flüssige Polyoxyalkylenglykol-Diglycidyläther (z.B. Beckopox® EP 075 der Firma Hoechst), aber auch flüssige Epoxidharze wie z.B. Bisphenol A- und F-diglycidyläther. Die Komponente (C-1) wird im folgenden aus Gründen der Einfachheit Reaktiwerdünner genannt. Bevorzugte Reaktivverdünner sind Hexandioldiglycidyläther und para-tert.-Butylphenylglycidyläther.

Als Monomere gemäß (C-2) kommen sämtliche äthylenisch ungesättigten Verbindungen in Frage, welche zur radikalischen Polymerisation in wäßriger Emulsion befähigt sind und nicht unerwünscht bei Raumtemperatur mit der vorliegenden Epoxidharzdispersion wechselwirken. Es ist bevorzugt, daß die Verbindungen (C-2) ausgewählt sind aus den Estern von α,β-olefinisch ungesättigten Carbonsäuren mit aliphatischen Alkoholen mit 1 bis 18 Kohlenstoffatomen, Vinylaromaten, Vinylestern und Vinylhalogeniden, α,β-olefinisch ungesättigten Carbonsäuren sowie deren Amiden und Nitrilen. Dazu zählen Acryl-, Methacryl- und höhere Alkacrylsäuren, sowie deren Alkylester (C₁- bis C₁₈-Alkyl(meth)acrylate, z.B. Methylacrylat und -methacrylat, Äthylacrylat und -methacrylat, n- und iso-Propylacrylat und -methacrylat, n-, iso- und tert-Butylacrylat, n- und tert-Butylmethacrylat, 2-Äthylhexylacrylat und -methacrylat, 4-tert-Butylcyclohexylacrylat, Isobornylacrylat und -methacrylat usw.) und Derivate (z.B. Acrylnitril), aber auch Vinylderivate (z.B. Styrol, α-Methylstyrol, Vinyltoluole, Vinylacetat, Vinylchlorid, Vinylidenchlorid, N-Vinylpyrrolidon usw.) und α,β-ungesättigte Carbonsäuren wie Maleinsäure, Fumarsäure, Itaconsäure usw. sowie deren Derivate, aber auch Alkene wie Isopren und Butadien. Die Monomeren können auch funktionelle Gruppen enthalten, welche bei der später anzustrebenden Härtungsreaktion partizipieren, so eignen sich hier z.B. speziell glycidylfunktionelle Monomere (z.B. Glycidylmethacrylat, Glycidylacrylat). Schließlich können auch mehrfunktionelle Monomere, sei es bezüglich der Polymerisation oder der Härtung, zugegen sein, so z.B. 1,6-Hexandioldiacrylat, Divinylbenzol usw.

Der Dispersion können gegebenenfalls auch Lösungsmittel (D) zugesetzt werden, wobei Massenanteile bis zu 10 % bevorzugt sind. Als organische Lösungsmittel kommen hier insbesondere in Frage Glykole, Mono- und Diätherund -ester von Glykolen mit Alkoholen und Säuren, aliphatische Alkohole mit gegebenenfalls verzweigten Alkylresten von 1 bis 12 Kohlenstoffatomen, cycloaliphatische und araliphatische Alkohole sowie Ester und Ketone, wobei diese Lösungsmittel einzeln oder im Gemisch eingesetzt werden können. Als Beispiele seien genannt: Äthylenglykol, Äthylenglykolmonomethyläther, Äthylenglykoldimethyläther, Butylglykol, Methoxypropanol, Äthoxypropanol, Äthanol, 1- und 2-Propanol, Butanol, Cyclohexanol, Benzylalkohol, Essigsäureäthylester, Aceton so wie Methylisobutylketon, aber auch Aromaten wie Toluol oder Xylol können verwendet werden. Bevorzugte Lösungsmittel sind Butylglykol, Methoxypropanol, Methoxybutanol, Isopropoxy-propanol, Äthoxypropanol, 2-Propanol und/oder Benzylalkohol.

Nach dem erfolgten Dispergiervorgang wird in der Epoxidharzdispersion die Emulsionspolymerisation eingeleitet, bei einer Temperatur, die eine zügige, vollständige Reaktion gewährleistet und gleichzeitig die Dispersion nicht gefährdet. Als Initiatoren kommen hierfür solche thermischer Natur oder Redoxsysteme, die sämtlich dem Fachmann gut bekannt sind, in Frage. Thermische Initiatoren sind Peroxide, Hydroperoxide, Perester, Diazoverbindungen, z.B. Dibenzoylperoxid, Acetylperoxid, Benzoylhydroperoxid, tert-Butylhydroperoxid, Di-tert-butylperoxid, Lauroylperoxid, Butyrylperoxid, Diisopropylbenzolhydroperoxid, Cumolhydroperoxid, Paramenthanhydroperoxid, Diacetylperoxid, Di-α-Cumylperoxid, Dipropylperoxid, Diisopropylperoxid, Isopropyl-tert.butylperoxid, Butyl-tert-butylperoxid, Dilauroylperoxid, Difuroylperoxid, Ditriphenylmethylperoxid, Bis(p-methoxybenzoyl)peroxid, p-Monomethoxybenzoyiperoxid, Rubrenperoxid, Ascaridolperoxid, Diäthylperoxyterephthalat, Propylhydroperoxid, Isopropylhydroperoxid, n-Butylhydroperoxid, Cyclohexylhydroperoxid, trans-Decalinhydroperoxid, α-Methylbenzylhydroperoxid, α-Methyl-α-äthylbenzylhydroperoxid, Tetralinhydroperoxid, Triphenylmethylhydroperoxid, Diphenylmethylhydroperoxid, 2,5-Dimethyl-2,5-bis(2-äthylhexanoylperoxy)-hexan, 1,1-Bis(tert.-butylperoxyl-cyclohexan und tert-Butylperbenzoat. Redox-Systeme können gewählt werden aus Oxydantien wie z.B. Wasserstoffperoxid, tert.-Butylhydroperoxid, Persulfaten, in Kombination mit Reduktionsmitteln wie alpha-Hydroxyketonen, Ascorbinsäure, Hydrazin und Sulfiten, Bisulfiten, Metasulfiten oder Hydrosulfiten. Bevorzugt sollten Initiatoren eingesetzt werden, welche keine oder wenig ionische Verbindungen generieren, um die Wasserempfindlichkeit der später eingebrannten Filme nicht unnötig zu erhöhen. Ein besonders bevorzugtes System ist tert.-Butylhydroperoxid/Ascorbinsäure.

Als Härter (II) für die Epoxidharze (I) der Erfindung können die hierfür bekannten Härtungsmittel bzw. härtenden Verbindungen (Epoxidhärter) eingesetzt werden, wie basische Härtungsmittel (Aminhärter), beispielsweise Polyamine, Mannich-Basen, Addukte von Aminen an Polymere wie Polyepoxide und Polyamidoamine.

Die Härtung der erfindungsgemäßen Epoxidharzdispersionen (I) ist ferner durch sogenannte latente Härtungsmittel, d.h. Verbindungen, die erst bei höherer Temperatur, beispielsweise bei 60 bis 250 °C, ihre vernetzende Wirkung gegenüber Epoxidverbindungen entfalten, möglich. Beispiele für solche Härter sind Harnstoff, Dicyandiamid, Imidazol und Imidazolin sowie (z.B. mit Alkyl- oder Alkoxy-Gruppen) substituierte Imidazole und Imidazoline, Benzo- und Acetoguanamin, Guanidin, Hydrazid und Derivate der genannten Verbindungen. Aber auch z.B. Melaminharze oder saure Härtungsmittel sind denkbar. Bevorzugt wird von diesen latenten Härtungsmitteln Dicyandiamid eingesetzt.

Beispiele für basische Härtungsmittel, vorzugsweise für die bevorzugte Härtung bei Raumtemperatur und/oder niedrigeren Temperaturen (Aminkalthärter), die allgemein im Verhältnis der Anzahl der Epoxidgruppen zur Anzahl der Amin-Wasserstoffatome von 1 zu (0,75 bis 2,0) eingesetzt werden, sind Polyalkylenamine, wie Diäthylentriamin, Triäthylentetramin, Tetraäthylenpentamin, Pentaäthylenhexamin u.a., ferner 2,2,4- und/oder 2,4,4-Trimethylhexamethylendiamin, Bis-(3-aminopropyl)-amin,1,4-Bis-(3-aminopropyl)-piperazin, N,N-Bis(3-aminopropyl)-äthylendiamin, Neopentandiamin, 2-Methyl-1,5-pentandiamin, 1,3-Diaminopentan, Hexamethylendiamin u.a., sowie cycloaliphatische Amine wie 1,2- bzw. 1,3-Diaminocyclohexan, 1,4-Diamino-3,6-diäthylcyclohexan, 1,2-Diamino-4-äthylcyclohexan, 1-Cyclohexyl-3,4-diaminocyclohexan, Isophorondiamin und Umsetzungsprodukte davon, 4,4'-Diaminodicyclohexyl-methan und -propan, 2,2-Bis(4-aminocyclohexyl)-methan und -propan,3,3'-Dimethyl-4,4'-diaminodicyclohexylmethan,3-Amino-1-cyclohexyl-aminopropan, 1,3- und 1,4-Bis-(aminomethyl)-cyclohexan.

Als araliphatische Amine werden insbesondere solche eingesetzt, bei denen aliphatische Aminogruppen vorhanden sind, z.B. meta- und para-Xylylendiamin, und/oder deren Hydrierungsprodukte.

Die genannten Amine können allein oder als Gemische verwendet werden.

Geeignete Mannich-Basen werden durch Kondensation von Polyaminen, vorzugsweise Diäthylentriamin, Triäthylentetramin, Isophorondiamin, 2,2,4- bzw. 2,4,4-Trimethylhexamethylendiamin, 1,3-und 1,4-Bis-(aminomethyl)-cyclohexan, insbesondere meta- und para-Xylylendiamin mit Aldehyden, vorzugsweise Formaldehyd und ein- oder mehrwertigen Phenolen mit mindestens einer gegenüber Aldehyden reaktiven Kernposition, beispielsweise den verschiedenen Kresolen und-Xylenolen, para-tert.-Butylphenol, Resorcin, 4,4'-Dihydroxydiphenylmethan, 4,4'-Dihydroxy-diphenyl-2,2-propan, vorzugsweise aber Phenol hergestellt.

Als Amin-Epoxid-Addukte kommen beispielsweise Umsetzungsprodukte von Polyaminen, wie z.B. Äthylendiamin, Propylendiamin, Hexamethylendiamin, 2,2,4-, 2,4,4-Trimethylhexamethylendiamin, meta-Xylylendiamin und/oder Bis-(aminomethyl)-cyclohexan mit endständigen Mono- oder Polyepoxiden, wie z.B. Propylenoxid, Hexenoxid, Cyclohexenoxid, oder mit Glycidyläthern wie Phenylglycidyläther, tert.-Butylglycidyläther, Äthylhexylglycidyläther, Butylglycidyläther oder mit Glycidylestern, wie dem von der Firma Shell vertriebenen Glycidylester der Versaticsäure, Cardura® E 10, oder den unter (A-1) genannten Polyglycidyläthern und -estern in Betracht.

Polyamidoamine, die zur Härtung der erfindungsgemäßen Epoxidharzdispersionen verwendet werden können, werden beispielsweise durch Umsetzung von Polyaminen mit Mono- oder Polycarbonsäuren, z.B. dimerisierten Fettsäuren, erhalten.

Bevorzugt werden als Aminhärter neben den oben genannten Polyaminen wasserlösliche Polyoxyalkylendi- und -polyamine mit molaren Massen von 100 bis 2000 g/mol, z.B. die von der Firma Texaco unter dem Warenzeichen Jeffamine® vertriebenen Produkte, sowie die leicht in Wasser dispergierbaren Härtungsmittel, wie sie in der DE-A 23 32 177 und der EP-A 0 000 605 beschrieben sind, also z.B. modifizierte Amin-Addukte, eingesetzt.

Zur Erzielung einer schnelleren und/odervollständigeren Durchhärtung können die aus den erfindungsgemäßen Epoxidharzdispersionen mit den genannten Aminhärtern erhältlichen Beschichtungen auch 15 bis 120 Minuten auf 50 bis 120 °C erhitzt werden (sog. forcierte Trocknung).

Als übliche Zusatzstoffe im Sinne von (III), die eventuell in den erfindungsgemäßen Dispersionen bzw. Bindemitteln vorhanden sein können, seien hier beispielsweise die üblichen Lackadditive wie Pigmente, Pigmentpasten, Antioxidantien, Verlaufs- bzw. Verdickungsmittel, Entschäumer/Entlüfter und/oder Netzmittel, Reaktivverdünner, Füllstoffe, Katalysatoren, Konservierungsmittel, Schutzkolloide und dergleichen genannt. Diese Additive, wie auch die Härter, können der Dispersion gegebenenfalls erst unmittelbar vor der Verarbeitung zugegeben werden.

Zur Herstellung der erfindungsgemäßen Dispersionen wird zunächst das Epoxidharz (A) durch Kondensation der Komponenten (A-1) und (A-2), gegebenenfalls mit (A-3), bei erhöhten Temperaturen, im allgemeinen bei 100 bis 220 °C, vorzugsweise bei 150 bis 180 °C, in Gegenwart eines die Kondensation beschleunigenden Katalysators hergestellt.

Geeignete Kondensationskatalysatoren sind beispielsweise Phosphine, wie Triphenylphosphin, Phosphoniumsalze, wie z.B. Benzyltrimethylphosphoniumchlorid, tertiäre Amine, wie N,N-Dimethylbenzylamin, quartäre Ammoniumsalze, wie z.B. Tetramethylammoniumchlorid, Alkalihydroxide, wie Natriumhydroxid und Lithiumhydroxid, Alkalicarbonate, wie Natriumcarbonat und Lithiumcarbonat. Alkalisalze organischer Säuren, wie z.B. Natriumformiat, Lithiumbenzoat und Lithiumstearat und Lewis-Säuren, wie z.B. Bortrifluorid und seine Komplexe, Titantetrachlorid, Zinnchlorid und Triäthyloxoniumtetrafluoroborat.
Werden zwei oder mehrere Epoxidverbindungen (A-1) eingesetzt, so wird die Kondensationsreaktion vorzugsweise in zwei Stufen durchgeführt, wobei in einer ersten Reaktion eine oder mehrere Komponenten (A-1) mit den Komponenten gemäß (A-2) und gegebenenfalls (A-3) in einem solchen Mengenverhältnis umgesetzt werden, daß dieses erste Kondensationsprodukt einen Epoxidgruppengehalt unter 200 mmol/kg, vorzugsweise unter 50 mmol/kg besitzt (Epoxid-Äquivalentgewicht größer als 5 000 g/mol, vorzugsweise größer als 20 000 g/mol) und noch freie phenolische Gruppen aufweist, und in einer weiteren Kondensationsreaktion dieses erste Kondensationsprodukt mit weiteren Epoxidverbindungen gemäß (A-1) umgesetzt wird, so daß schließlich das gewünschte Epoxidharz (A) erhalten wird.

Das Dispergiermittel (B-1) wird durch Kondensation der genannten Polyätherpolyole mit den Polyglycidyläthern gemäß (A-1) in Gegenwart geeigneter Katalysatoren bei 50 bis 200 °C, vorzugsweise bei 90 bis 170 °C, hergestellt, wobei das Verhältnis der Anzahl der Hydroxyl-Gruppen zur Anzahl der Epoxidgruppen 1:0,5 bis 1:8, vorzugsweise 1:0,85 bis 1:4 und der Epoxidgruppengehalt des Kondensationsproduktes 2,5 bis 8500 mmol/kg (Epoxidäquivalentgewicht 120 g/mol bis 400 000 g/mol) beträgt.

Als Katalysatoren für die Darstellung des Dispergiermittels (B-1) eignen sich starke anorganische und organische Basen, wie zum Beispiel Alkali- und Erdalkalihydroxide und -oxide (z.B. Lithiumhydroxid, Natriumhydroxid, Kaliumhydroxid, Calciumhydroxid, Bariumhydroxid, Magnesiumoxid, Calciumoxid usw.), Alkalialkoholate (z.B. Natriummethylat, Lithiummethylat, Natriumethylat, Kaliumdodecylat usw.) sowie die Alkalisalze von Carbonsäuren (z.B. Natrium- und Lithiumstearat bzw. -lactat) und Hydride (z.B. Alkali- und Erdalkalihydride und -borhydride wie Natriumhydrid, Calciumhydrid und Natriumborhydrid usw.). Ebenfalls geeignet sind starke anorganische und organische Protonsäuren (z.B.Phosphorsäure, Schwefelsäure, Tetrafluorborsäure und Benzolsulfonsäure usw.) als auch Lewis-Säuren (z.B. Zinn(IV)chlorid, Titan(IV)chlorid, Titan(IV)isopropylat, Triäthyloxoniumtetrafluoroborat sowie Bortrifluorid und seine Komplexe, zum Beispiel mit Phosphorsäure, Essigsäure (1:1 und 1:2), Methanol, Diäthyläther, Tetrahydrofuran, Phenol, Äthylenglykolmonoäthyläther, Polyäthylenglykol (MG 200), Dimethylsulfoxid, Di-n-Butyläther, Di-n-Hexyläther, Bernsteinsäure und aliphatische, cycloaliphatische, araliphatische Amine sowie Stickstoff-Heterocyclen usw.). Aber auch gewisse anorganische Salze eignen sich gut als Katalysatoren, wie z.B. Alkaliund Erdalkalifluoride, -phosphate und -stannate.

Bevorzugt werden als Katalysatoren die Komplexe von BF₃ mit Diäthyläther und Essigsäure sowie wäßrige Tetrafluorborsäure eingesetzt. Der Massenanteif an Katalysator beträgt im allgemeinen 0,1 bis 5, vorzugsweise 0,1 bis 1 % im Reaktionsgemisch. Zur besseren Dosierung kann der Katalysator in einem Lösungsmittel wie Diäthyläther, einem Glykol- oder cyclischen Äther, Ketonen und dergleichen verdünnt werden.

Zur Herstellung des Dispergiermittels erwärmt man die umzusetzenden Gemische aus Hydroxylgruppen und Epoxidgruppen enthaltenden Verbindungen bis zu der Temperatur, bei der die Kondensation mit ausreichender Geschwindigkeit d.h. in 30 min bis 5 Stunden, abläuft. Die Umsetzung verfolgt man zweckmäßig über die Abnahme des Epoxidgruppengehalts. Die Reaktion kann durch Kühlung unter die Reaktionstemperatur abgebrochen werden.

Das so gewonnene Kondensationsprodukt kann als solches (100%ig) als Dispergiermittel (B-1) zur Herstellung der erfindungsgemäßen Dispersionen verwendet werden. Vorzugsweise wird jedoch aus Gründen der besseren Handhabbarkeit eine Mischung mit einem Massenanteil von 20 bis 99, vorzugsweise 40 bis 60 % des Kondensationsproduktes bevorzugt mit Wasser oder gegebenenfalls mit einem vorzugsweise wäßrigen Medium, bestehend aus Massenanteilen von bis zu 100, vorzugsweise bis zu 75 %, eines organischen Lösungsmittels hergestellt und diese Mischung als Dispergiermittel (B-1) verwendet. Als organische Lösungsmittel kommen insbesondere Glykole, Mono- und Diäther- und -ester von Glykolen mit Alkoholen und Säuren, aliphatische Alkohole mit gegebenenfalls verzweigten Alkylresten von 1 bis 12 Kohlenstoffatomen, cycloaliphatische und araliphatische Alkohole sowie Ester und Ketone in Betracht, wobei diese Lösungsmittel einzeln oder im Gemisch eingesetzt werden können. Als Beispiele seien genannt: Äthylenglykol, Äthylenglykolmonomethyfäther, Äthylenglykoldimethyläther, Butylglykol, Methoxypropanol, Äthoxypropanol, Äthanol, 1- und 2-Propanol, Butanol, Cyclohexanol, Benzylalkohol, Essigsäureäthylester, Aceton so wie Methylisobutylketon. Bevorzugt werden Butylglykol, Methoxypropanol, Äthoxypropanol, 2-Propanol, Hydroxyäthyl- oder -propylmethacrylat und/oder Benzylalkohol eingesetzt, oder die unter (C-1) aufgeführten Monomere.

Das Verdünnungsmittel (C) wird als gesamte Menge auf einmal vor dem Dispergieren zugesetzt, es dient so als Viskositätssenker und erleichtert die Dispergierung, oder es kann bei einem größeren Menge zum Teil während des Dispergiervorgangs zugegen sein, und der Rest wird nach erfolgter Dispergierung, z.B. kontinuierlich während der Emulsionspolymerisation zugegeben. Dabei müssen die beiden Teilmengen bezüglich Art und Zusammensetzung der Komponenten (C-1) und ggf. (C-2) nicht identisch sein. Auf diese Weise lassen sich bei Epoxid-Polyacrylat-Dispersionen gezielt core-shell-Partikel erzeugen. Die Anwesenheit des Verdünnungsmittels während der Dispergierung hat den Sinn, daß das Viskositätsmaximum bei der Phaseninversion W/O → O/W nicht durch inerte, in der fertigen Dispersion verbleibende Lösungsmittel abgesenkt werden muß, wie es in DE 41 28 487 beschrieben wurde. Somit gelingt die Formulierung völlig lösungsmittelfreier Dispersionen - eine weitere erhebliche Verbesserung gegenüber dem Stand der Technik. Ein zu hoher Gehalt während des Dispergiervorganges würde aber die Viskosität zu weit senken, die einzutragende Scherkraft für die Zerteilungsvorgänge könnte nicht mehr aufgebaut werden. Darum ist gegebenenfalls die Aufteilung der Gesamtmenge in zwei zweckmäßige Teilmengen nötig.

Der Einsatz von Reaktivverdünner (C-1) erfolgt, um die anwendungstechnischen Eigenschaften der Dispersion zu steuern, z.B. Senkung der Mindestfilmbildungstemperatur, Verlängerung der Verarbeitungszeit, Verbesserung von Glanz, Scherstabilität und Stabilität gegenüber Gefrier-Tau-Zyklen, gezielte Beeinflussung von Härte und Elastizität usw. Der Vorteil gegenüber der Verwendung organischer Lösungsmittel liegt darin, daß diese Reaktivverdünner bei der Härtungsreaktion in den Film eingebaut werden und somit nicht zur unerwünschten Emission organischer Komponenten führen, der Anspruch der Lösungsmittelfreiheit also gewahrt bleibt. Die Zugabe des Reaktivverdünners vor dem Dispergierprozeß hat den wesentlichen Vorteil, daß dieser mit weniger Aufwand deutlich besser emulgiert wird als im Falle einer nachträglichen Zugabe zur fertigen Dispersion, was zu einer verbesserten Qualität der Beschichtung führt. In diesem Falle liegen Reaktivverdünner und Basisharz in gemeinsamen Micellen vor, was durch nachträgliches Einhomogenisieren der Reaktivverdünner nicht zu erreichen ist. Der Gehalt an Reaktivverdünner ist zum Festkörper des Bindemittels bzw. des Lackes hinzuzurechnen.

Dem Epoxidharz (A) werden zur Herstellung der Epoxid-Polyacrylat-Dispersion bei Temperaturen von 60 bis 200 °C, vorzugsweise von 70 bis 120 °C, die Monomeren (C-2) - evtl. stabilisiert mit geeigneten, dem Fachmann bekannten Inhibitoren - und Reaktivverdünner (C-1) bzw. eine zweckmäßige Teilmenge, dann die Dispergiermittel (B-1) und ggf. (B-2), ggf. gefolgt von organischen Lösungsmittel (D) zugegeben und 15 bis 180, vorzugsweise 30 bis 90 Minuten, verrührt. Wahlweise läßt sich nach der Zugabe der Monomeren eine Reaktion zwischen Epoxidharz und den Monomeren durchführen, wie z.B. Addition von Carboxyl- oder Amin-Monomeren an die Epoxidgruppen oder Pfropfung an aliphatische Kohlenstoffatome der Epoxidkomponenten (A) und (C-2), bevor das Dispergiermittel zugegeben wird.

Danach wird bei Temperaturen von 30 bis 100 °C, bevorzugt 50 bis 90 °C, die entsprechende Menge an Wasser (D), vorzugsweise in mehreren Teilmengen, unter kräftigem Rühren zudosiert, wodurch die wäßrige Dispersion entsteht. Hierbei können gegebenenfalls geeignete Entschäumer-/Entlüfter-Additive zugesetzt werden. Die Dispergierung erfolgt zweckmäßigerweise unter Zuhilfenahme geeigneter Dispergierapparate, beispielsweise eines schnellaufenden Flügelrührers, eines Mehrimpulswendelrührers, einer Kolloidmühle, eines Homogenisators, eines Dissolvers oder eines sonstigen Schnellmischers mit einer hohen Scherkraft. Dieser Vorgang wird sehr detailliert in DE-A 41 28 487 beschrieben.

In der so erhaltenen, monomerenhaltigen und reaktivverdünnerhaltigen Epoxidharz-Dispersion wird nun bei geeigneter Temperatur die Emulsionspolymerisation eingeleitet. Die Temperatur muß ausreichend hoch sein, damit eine zügige Polymerisationsrate erreicht wird, andererseits darf durch eine zu hohe Temperatur die Stabilität der Dispersion nicht gefährdet werden. Bei Redox-Initiatoren wird bevorzugt das Oxidationsmittel zusammen mit dem Verdünnungswasser einhomogenisiert, und das Reduktionsmittel kontinuierlich zudosiert - aber alle denkbaren Varianten sind ebenfalls erfindungsgemäß. Bei höherer Monomerenmenge, als für die Dispergierung benötigt, wird dabei auch die Restmenge der Monomeren (C-2) zudosiert, wobei hier gezielt die Darstellung von core-shell-Acrylatpartikeln möglich ist, um die Eigenschaften der Dispersion in gewünschter Weise zu steuern. Der bevorzugte Temperaturbereich für die Emulsionspolymerisation beträgt 60 bis 90 °C, die Reaktionskontrolle erfolgt über Festkörperbestimmung oder Gaschromatographie. Eine unerwünschte Viskositätszunahme kann durch Nachdosieren von Wasser ausgeglichen werden.

Das Massenverhältnis von Epoxidharz (A) zu Additionspolymeren (C-2) liegt von 99,5 : 0,5 bis 20 : 80, bevorzugterweise zwischen 5 : 95 und 50 : 50. Dabei enthält das Polymere (C-1) gegebenenfalls glycidylgruppenhaltige Monomere, bevorzugt Massenanteile von 2,5 bis 25 %. Der Massenanteil an Reaktivverdünner (C-1) kann bis zu 25 % bezogen auf die Masse der Polymere (A) und (C-2) betragen. Der Massenanteil an Dispergiermittel (B) bezieht sich auf sämtliche nicht wasserlöslichen Bestandteile der Dispersion, d.h. auf das Epoxidharz (A), das Polymer (C-2) und Reaktivverdünner (C-1) und liegt zwischen 1 und 25 %, bevorzugt zwischen 2 und 15 %. Die Zusammensetzung des Dispergiermittels liegt für (B-1) : (B-2) zwischen 0 : 100 und 100 : 0, bevorzugt über 75 : 25. Der Festkörper-Massenanteil der erfindungsgemäßen Dispersion liegt zwischen 30 und 90 %, bevorzugt aber von 55 bis 75 %, wobei die Dispersion einen Massenanteil bis zu 10 % Lösungsmittel enthalten kann, bevorzugt aber lösungsmittelfrei ist.

Das Epoxidharz entsprechend (A) der erfindungsgemäßen Dispersionen besitzt vorzugsweise einen Epoxidgruppengehalt von 250 bis 3000 mmol/kg, insbesondere 300 bis 2500 mmol/kg (Epoxidäquivalentgewicht von 350 bis 4000, insbesondere von 400 bis 3000). Die mittlere Teilchengröße des dispergierten Harzes ist in der Regel nicht höher als 1,0 µm und beträgt vorzugsweise 0,2 bis 0,8 µm. Die Teilchengröße des Polyacrylats (C-2) liegt unter 0,5 µm, bevorzugt unter 0,25 µm. Auch im Falle einer Pfropfung liegen die Teilchengrößen der erfindungsgemäßen Dispersionen unter 1µm.

Die Viskosität dieser Dispersionen beträgt im allgemeinen zwischen 200 und 30000 mPa·s, vorzugsweise zwischen 750 und 7000 mPa·s.

Die erfindungsgemäßen Dispersionen zeichnen sich zum einen durch ihre gute Lagerstabilität aus, die auf die für Sekundärdispersionen geringe mittlere Teilchengröße zurückzuführen ist, ferner insbesondere durch ihren sehr geringen oder fehlenden Gehalt an organischen Lösungsmitteln und vor allem durch den wesentlich höheren Festkörper. Verglichen mit bereits bekannten Epoxidharzdispersionen bzw. Epoxid-Acrylat-Dispersionen besitzen die mit den erfindungsgemäßen Dispersionen erhältlichen Beschichtungen außerdem eine Reihe technischer Vorteile, z.B. geringe Wasserempfindlichkeit, gute Elastizität bei gleichzeitig sehr hoher Härte, gute bis sehr gute Haftung auf den unterschiedlichsten Substraten, hervorragende Korrosionsschutzwirkung bei Beschichtung metallischer Materialien, Verlängerung der Topfzeit u.a.

Die Härter und weiteren härtbaren Harze gemäß (II) werden vorzugsweise erst unmittelbar vor der Anwendung der Dispersion zugegeben.

Aufgrund ihrer bereits angesprochenen hervorragenden technischen Eigenschaften, beispielsweise hinsichtlich Haftung, sehr hohe Härte, Korrosionsschutzwirkung, Wasser- und Chemikalienbeständigkeit u.a., eignen sich die erfindungsgemäßen Dispersionen in Kombination mit geeigneten Härtungsmitteln und Zusatzstoffen zur Herstellung von Überzügen, Zwischenbeschichtungen, Anstrichmaterialien, Formmassen und härtbaren Massen für die unterschiedlichsten Anwendungsgebiete. Beispielsweise können sie zur Herstellung von Schutz- und/oder Dekorbeschichtungen auf den unterschiedlichsten, insbesondere rauhen und porösen Substraten, wie z.B. Holz, mineralischen Untergründen (z.B. Beton und Stein), Glas, Kunststoffen (z.B. Polyäthylen, Polypropylen usw.), Kompositwerkstoffen, Keramik und vorbehandelten oder nicht vorbehandelten Metallen verwendet werden.

Die erfindungsgemäßen Dispersionen sind auch hervorragend für die Einschichtlackierung geeignet. Die haftende Überzugsschicht kann als solche unverändert bleiben, sie kann aber auch als Zwischenschicht, also als Unterlage für weitere Beschichtungen, dienen, die wiederum aus demselben oder einem anderen üblichen Beschichtungsmaterial bestehen können.

Aus Epoxid-Polyacrylat-Dispersionen können bei geeigneter Wahl der Reaktivverdünner (C-1) und der Monomeren (C-2) matte Klarlacke hergestellt werden, deren sonstiges Eigenschaftsbild unverändert gut ist (gute Haftung auf den verschiedensten Untergründen, sehr hohe Härte, gute Beständigkeiten usw.).

Wegen ihrer guten Verdünnbarkeit und ihrer günstigen Eigenschaften eignen sich die erfindungsgemäßen Dispersionen auch zur zusätzlichen Verwendung in der Elektrotauchlackierung.

Eine weitere Möglichkeit ist die Verwendung der erfindungsgemäßen Dispersionen zur Herstellung wasserverdünnbarer Klebstoffe. Auch als Bindemittel für textile, organische und/oder anorganische Materialien sind diese einsetzbar. Ferner können sie auch als Zusatz zu Kunststoffzementen dienen.

Im Falle des Einsatzes als Beschichtungsmittel bzw. als überwiegend wäßriger Lack erfolgt die Applikation auf das Substrat nach herkömmlichen Methoden, wie beispielsweise Streichen, Spritzen, Tauchen oder Aufwalzen. Die Beschichtungen werden, sofern keine Härtungsmittel für die Kalthärtung mitverwendet werden, durch Erhitzen auf 80 bis 250 °C für eine zum Aushärten ausreichende Zeit, im allgemeinen 5 bis 60 Minuten, gehärtet.

Ggf. benötigte Additive gemäß (III) sowie - falls für den beabsichtigten Einsatz gewünscht - weitere Härtungsmittel werden in solchen Mengen zugesetzt, wie sie für den entsprechenden Zweck benötigt und dem Fachmann bekannt sind. In diesem Fall bleibt dem Anwender überlassen, welchen Festkörper und Lösungsmittelgehalt er wählt.

Die folgenden Beispiele beschreiben die Herstellung des Epoxidharzes (A), des Dispergiermittels (B-1), der Dispersion (A) + (B) + (C) bzw. des Bindemittels (A) + (B) + (C) + (II) sowie dessen Anwendung, wobei sie sich auf die besonders bevorzugten, absolut lösungsmittelfreien Systeme beschränken.

### BEISPIELE

### I. Epoxidharze (A)

**I.1** Ein handelsübliches Epoxidharz auf der Basis von Bisphenol A und Epichlorhydrin mit einem Epoxidgruppengehalt von ca. 2100 bis 2300 mmol/kg (Epoxidäquivalentgewicht von 450 bis 470 g/mol) (z.B. Beckopox® EP 301 oder Epikote® 1001)
**I.2** Ein flexibilisiertes Epoxidharz, hergestellt durch Umsetzung von 150 g Diglycidyläther von Polypropylenglykol mit einem Epoxidgruppengehalt von 2750 bis 3150 mmol/kg (EV-Wert von 320 bis 360 g/mol) und 234 g Bisphenol A bei 160 °C mit ca. 0,2 g Triphenylphosphin bis zum vollständigen Verschwinden der Epoxidgruppen, und weiterer Umsetzung dieses phenolischen Zwischenproduktes mit 750 g Bisphenol A-Diglycidyläther (Epoxidgruppengehalt 5400 mmol/kg; EV = 185 g/mol) unter denselben Bedingungen bis zu einem Epoxidgruppengehaltvon 2100 bis 2300 mmol/kg (EV-Wert von ca. 460 bis 470 g/mol).
**I.3** Ein selbstdispergierendes Epoxidharz vom Typ Beckopox® EP 301, erhalten durch Umsetzung von Bisphenol A, dessen Diglycidyläther (Epoxidgruppengehalt 5405 mmol/kg; EV-Wert 185 g/mol) und einem lösungsmittelfreien Dispergiermittel (B-1) bei Temperaturen um 160 °C, analog wie in DE-A 36 43 751 beschrieben.

### II. Dispergiermittel (B-1)

309 g technisches Polyäthylenglykol mit eine gewichtsmittleren molaren Masse (Mw) von 4000 g/mol und 34,1 g eines Polyglycidyläthers auf Basis von Bisphenol A mit einem Epoxidgruppengehalt von 5460 mmol/kg (Epoxidäquivalentgewicht von 183 g/mol) wurden zusammen auf 100 °C erhitzt und unter Rühren mit 0,35 ml 50%iger wäßriger Tetrafluorborsäure versetzt. Das.Verhältnis der Anzahl der Hydroxyl-Gruppen zur Anzahl der Epoxidgruppen betrug 1 : 1,20. Die Mischung wurde weiter auf 130 °C erwärmt und bei dieser Temperatur gehalten, bis der Epoxidgruppengehalt des Kondensationsproduktes ca. 2,9 mmol/kg (Epoxidäquivalentgewicht ca. 350000 g/mol) betrug. Nach Erkalten wies der Emulgator eine spröde, wachsartige feste Konsistenz auf und kann direkt für die Herstellung des Epoxidharzes I.3 verwendet werden.

250 g dieses Kondensationsproduktes wurden unter Rühren und leichtem Erwärmen auf ca. 80 °C in 250 g Wasser gelöst. Die erhaltene hellgelbe, klare Emulgatorlösung wies eine Viskosität (gemessen nach Brookfield, 25 °C) von 3500 mPa.s und einen Festkörper-Massenanteil von 50 % auf.

### III. Dispersionen (A) + (B) + (C)

**Abkürzungen für Reaktivverdünner, Monomere und Lösungsmittel:**

| | | | |
|---|---|---|---|
| HDDGE | Hexandiol-1,6-diglycidyläther | TBPGE | tert.Butylphenylglycidyläther |
| CGE | Kresylglycidyläther | AGE | C₁₃-C₁₅-Alkylglycidyläther |
| EHGE | 2-Äthylhexylglycidyläther | | |
| MMA | Methylmethacrylat | MAS | Methacrylsäure |
| GlyMA | Glycidylmethacrylat | BuA | n-Butylacrylat |
| BDG | Butyldiglykol | TX | Texanol |
| BzOH | Benzylalkohol | PM | Methoxypropanol |

**Allgemeine Arbeitsvorschrift für Epoxidharz-Dispersionen:**
423 g Epoxidharz (A) werden geschmolzen und bei 100 °C mit Reaktivverdünner gemäß (C-1) homogenisiert und bei 90 °C ggf. mit 81 g Dispergiermittel (B) versetzt (Harze I. 1 und I.2). Man rührt bei 80 °C zügig 50 bis 90 g Wasser ein, rührt bis zur Phaseninversion und gibt schrittweise ca. 170 g Wasser zu, wobei die Temperatur zum Schluß bei 60 °C liegt. Es wird mit etwas Wasser auf etwa 2500 mPa·s eingestellt.

**Allgemeine Arbeitsvorschrift für Epoxid-Polyacrylat-Dispersionen:**
423 g Epoxidharz (A) werden geschmolzen und bei 100 °C mit Verdünnungsmittel gemäß (C), bestehend aus Reaktivverdünnern (C-1) und Monomeren (C-2) homogenisiert und bei 90 °C mit 81 g Dispergiermittel (B) versetzt. Man rührt bei 80 °C zügig 50 bis 90 g Wasser ein, rührt bis zur Phaseninversion und gibt schrittweise ca. 170 g Wasser zu, wobei die Temperatur zum Schluß bei 60 °C liegt. Man gibt einen Massenanteil von 1 % (bezogen auf die Masse des Monomeren (C-2)) an tert.-Butylhydroperoxid zu und homogenisiert 30 Minuten, wobei man auf 60 °C hält. Man hält bei dieser Temperatur, gibt 0,05 ml FeSO₄-7-Hydrat-Lösung (2% in Wasser) zu und dosiert während 1,5 Stunden einen Massenanteil von 1,5 % (bezogen auf die Masse der Monomeren) Ascorbinsäure als Lösung in etwa 45 g Wasser zu (ggf. synchron die restlichen Monomere), wobei eine leichte Exothermie zu beobachten ist. Nachdem der Ansatz noch 1,5 h bei 60 °C nachreagieren konnte, wird mit etwas Wasser auf etwa 2500 mPa·s eingestellt.

**Tabelle:**

| Bsp. | Harz | Reaktivverd. (%) | Lösungsmittel (%) | Monomere (%) | nfA (%) | EGG mmol/kg | EV Lff. (g/mol) | TG (nm) | Visk. (mPa·s) |
|---|---|---|---|---|---|---|---|---|---|
| III.1 | I.1 | 5 HDDGE | 0 | 9 MMA, 1 GlyMA | 60,5 | 1233 | 811 | 406 | 6300 |
| III.2 | I.3 | 5 HDGE | 0 | 10 MMA | 58,5 | 1253 | 798 | 523 | 5400 |
| III.3 | I.3 | 7 TBPGE | 3 BzOH, 7 PM | 0 | 53,6 | 1182 | 846 | 568 | 3900 |
| III.4 | I.3 | 7 CGE | 3 BzOH, 7 PM | 0 | 55,2 | 1178 | 849 | 624 | 6100 |
| III.5 | I.3 | 7 HDDGE | 3 BzOH, 7 PM | 0 | 53,6 | 1258 | 795 | 531 | 3000 |
| III.6 | I.3 | 7 AGE | 3 BzOH, 7 PM | 0 | 53,9 | 1116 | 896 | 563 | 3000 |
| III.7 | I.3 | 7 EHGE | 3 BzOH, 7 PM | 0 | 52,2 | 1182 | 846 | 496 | 3100 |
| V.1 | I.3 | 0 | 3 BzOH, 7 PM | 0 | 53,0 | 1000 | 1000 | 600 | 1200 |
| V.2 | I.3 | 0 | 3 BDG, 7 TX | 0 | 49,0 | 980 | 1020 | 530 | 3500 |
| V.3 | I.3 | 0 | 7 PM | 0 | 52,6 | 1052 | 950 | 634 | 3000 |
| V.4 | I.1 | 0 | 0 | 10 MMA | 63,1 | 1111 | 900 | 863 | 1000 |
| V.5 | I.1 | 0 | 0 | 9 MMA, 1 GlyMA | 63,2 | 1170 | 855 | 595 | 590 |
| Abkürzungen: nfA nichtflüchtige Anteile, Festkörper (1 g, 1 h, 125 °C) EGG Epoxidgruppengehalt EV Epoxidäquivalentgewicht TG Teilchengröße, Photonenkorrelationsspektroskopie, monomodal Lff. Lieferform | | | | | | | | | |

### IV. Herstellung der erfindungsgemäßen Beschichtungsmittel

50 g Dispersion werden mit einem Härtungsmittel gemäß EP-A 0 000 605 (Beispiel 5c), welches mit Wasser auf 40 % verdünnt wurde (Gehalt an aktiven Wasserstoff-Atomen 3125 mmol/kg; "H-Aktiv-Äquivalentgewicht" 320 g/mol), im stöchiometrischen Verhältnis 1:1 gemischt und als Klarlack auf entfettete Glasplatten aufgezogen (Naßfilm-Schichtdicke ca. 200 µm). Trocknung erfolgt bei Raumtemperatur.

### V. Anwendungstechnische Eigenschaften

Erläuterung der Prüfungsbedingungen:
**1. Staubtrocken:** Auf den Film gestreute Glasperlen lassen sich nach der Aushärtung nicht mehr mit einem Pinsel entfernen.
**2. Klebfrei:** Die Glasperlen lassen sich nach der Aushärtung mit einem Pinsel entfernen.
**3. Topfzeit ("Pot-life"):** Nach dem Mischen von Härter und Dispersion werden halbstündlich Filme mit einer Naßfilmdicke von 200 µm aufgezogen. Das Auftreten einer Trübung im Film nach Aushärtung zeigt das Ende der Verarbeitungszeit an und wird als Prüfergebnis eingetragen.
**4. Härte:** Pendelhärte nach König, DIN 53 157.
**5. Wasserfestigkeit nach 24 h, Lagerung bei Raumtemperatur:** Auf Glasplatten mit 200 µm Naßfilmdicke aufgezogene Filme werden nach 24 h Lagerung in Wasser bei Raumtemperatur geprüft. Die Bewertungsskala reicht von 0 = sehr gut bis 5 = schlecht.
**6. MFT-Kurve:** Auf einer Coesfeld (MFT-"D")-Meßbank wurde die Änderung der MFT (Mindest-Filmbilde-Temperatur) im Laufe der Reaktionszeit gemessen. Fehler bei der Filmbildung (Trocknungstemperatur niedriger als MFT) treten auf in Form von Filmrissen, Trübung und Weißanlaufen; die Temperatur, bei welcher gerade noch ein intakter Film auftritt, ist die MFT. Auf diese Weise wurden MFT-Reaktionszeit-Funktionen für eine Reaktionstemperatur von 20 °C erhalten.

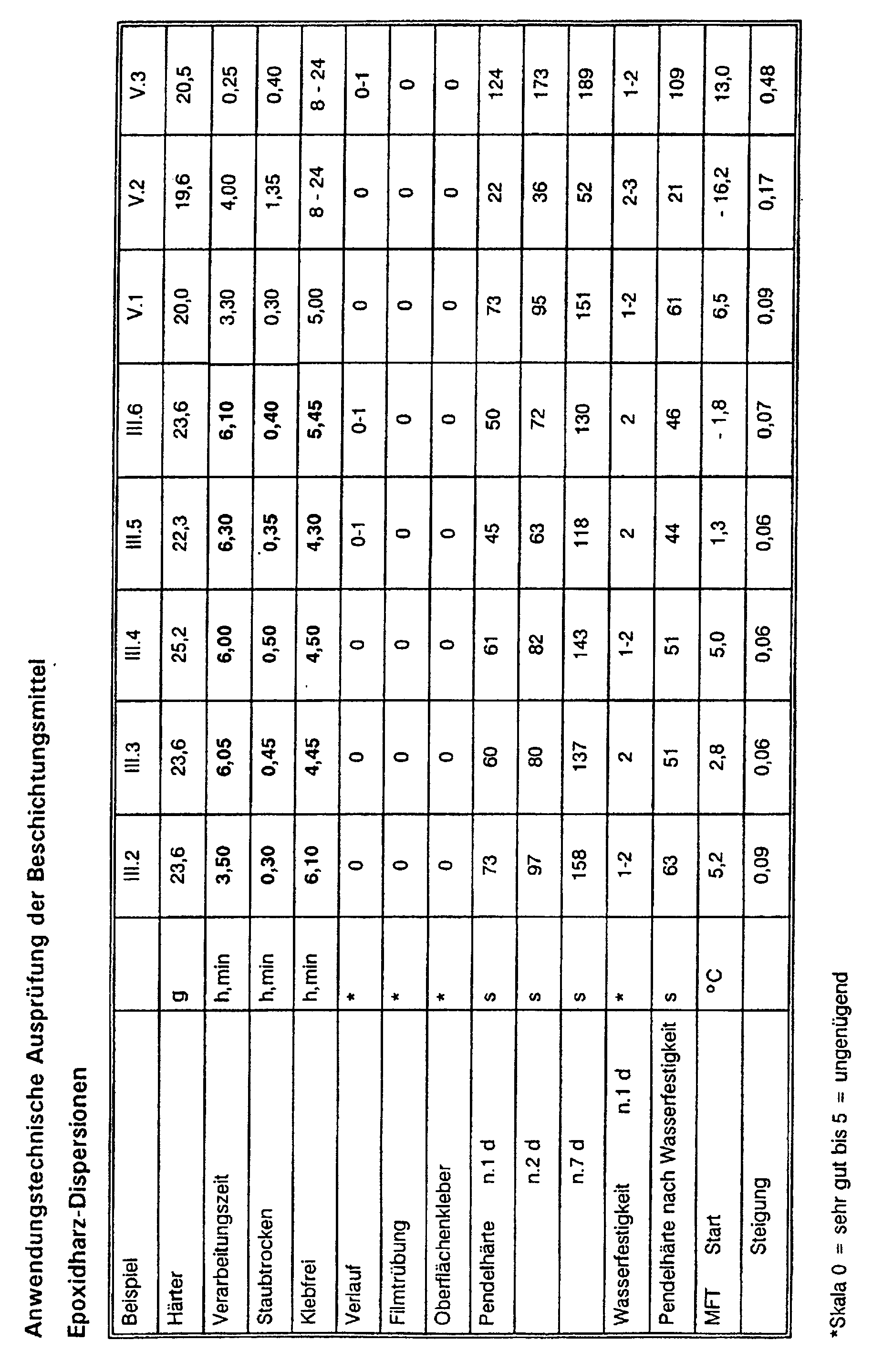

Man erkennt sehr deutlich die erheblich verlängerte Verarbeitungszeit der Systeme mit Reaktiwerdünner. Deren Filme weisen vergleichbare Eigenschaften zu Standard-Systemen auf (V.1 und V.3), während der Vergleich V.2 sogar gegenüber den Standardsystemen zurückfällt, ohne daß durch Texanol eine übermäßige Topfzeitverlängerung eintritt. Insgesamt sind die erfindungsgemäßen Beschichtungen nur unwesentlich weicher als die Standards V.1 und V.3.
Die Kombination Butyldiglykol + Texanol (V.2) senkt zwar die MFT am stärksten ab, bringt jedoch aufgrund des starken MFT-Anstiegs während der Härtung (Vernetzung und Verdunstung parallel) trotzdem nicht die zu erwartende Topfzeitverlängerung.

V.3 besitzt eine unzureichend niedrige Topfzeit, da hier nur Methoxypropanol als Koaleszenzmittel vorliegt, welches nicht effektiv genug ist.

### Epoxy-Acrylat-Dispersionen

| **Beispiel** | | **III.1** | **III.2** | **V.4** | **V.5** |
|---|---|---|---|---|---|
| Härter | g | 16,9 | 17,1 | 22,1 | 17,0 |
| Verarbeitungszeit | h,min | 2,50 | 3,00 | 0,15 | <0,30 |
| Staubtrocken | h,min | 0,45 | 0,45 | 0,25 | 30 |
| Klebfrei | h,min | 4,30 | 4,30 | 1,15 | 1,10 |
| Verlauf | * | 0 | 0 | 0 | 0 |
| Filmtrübung | * | 0 | 0-1 | 3-4 | 0 |
| Oberflächenkleber | * | 0 | 0 | 0 | 0 |
| Pendelhärtenach 1 d | s | 62 | 55 | 132 | 146 |
| nach 2 d. | s | 89 | 77 | 149 | 177 |
| nach 7 d | s | 145 | 132 | 188 | 201 |
| Wasserfestigkeit nach 1 d | * | 0-1 | 1-2 | 4 | 0-1 |
| Pendelhärte nach Wasserfestigkeit | s | 84 | 63 | 83 | 103 |

| | | | | | |
|---|---|---|---|---|---|
| *Skala 0 = sehr gut bis 5 = ungenügend | | | | | |

Während die Vergleichssysteme unpraktikabel kurze Verarbeitungszeiten aufweisen und V.4 zudem eine wasserempfindliche Beschichtung liefert, zeigt sich auch hier der vorteilhafte Effekt durch die Reaktivverdünner. Lediglich die hohe Filmhärte der Standards kann nicht erreicht werden.

### Zeitpunkt und Art der Zugabe des Reaktivverdünners

Die Dispersion III.5 wurde mit Beckopox EP 384w verglichen, wenn letzterer Dispersion der Hexandiol-Diglycidyläther nachträglich zugefügt wurde,

| **Beispiel** | | **III.5** | **III.5-1** | **III.5-2** |
|---|---|---|---|---|
| Reaktiwerdünner HDDGE | g | - | 1,75 | 1,75 |
| Härter | g | 22,3 | 14,4 | 14,4 |
| Verarbeitungszeit | h,min | **5,50** | 3,30 | 3,30 |
| Staubtrocken | h,min | 0,50 | 0,50 | 0,50 |
| Klebfrei | h,min | 5,10 | 5,00 | 5,10 |
| Trübung | * | 0 | 0 | 0 |
| Pendelhärtenach 1 d | s | 49 | 57 | 54 |
| nach 2 d | s | 83 | 87 | 86 |
| nach 7 d | s | 179 | 187 | 186 |
| Wasserfestigkeit nach 1 d | * | 1-2 | 1-2 | 1-2 |
| Pendelhärte nach Wasserfestigkeit | s | 56 | 58 | 58 |

| | | | | |
|---|---|---|---|---|
| *Skala 0 = sehr gut bis 5 = ungenügend | | | | |

### III.5-1: HDDGE 5 Minuten lang mit Teflon-Disk am Dissolver eindispergiert.

### III.5-2: HDDGE 5 Minuten lang mit Spatel eingerührt.

Hier zeigt sich, daß außer einer deutlichen Topfzeit-Verlängerung bei Zugabe des Reaktivverdünners vor dem Dispergieren des Basisharzes keine wesentlichen Unterschiede zwischen den Dispersionen bestehen.

## Patentansprüche

1. Verfahren zur Herstellung einer wäßrigen Epoxidharzdispersion (I), in welchem ein Epoxidharz (A) durch Kondensation von Massenanteilen von 50 bis 95 % einer oder mehrerer Epoxidverbindung(en) (A-1) mit mindestens zwei Epoxidgruppen pro Molekül und
5 bis 50 % eines aromatischen Polyols (A-2) bei 100 bis 220 °C in Gegenwart von Kondensationskatalysatoren hergestellt wird,
darauf ein Dispergiermittel (B) enthaltend ein Kondensationsprodukt (B-1) aus einem aliphatischen Polyol (B-11) mit einer gewichtsmittleren molaren Masse (M_{w}) von 200 bis 20 000 g/mol und einer Epoxidverbindung (B-12) mit mindestens zwei Epoxidgruppen pro Molekül einhomogenisiert wird und eine wäßrige Dispersion durch portionsweises Zudosieren von Wasser (D) erhalten wird,
**dadurch gekennzeichnet, daß** vor dem Dispergierschritt bei Temperaturen von 60 bis 200 °C ein Verdünnungsmittel (C) enthaltend niedermolekulare flüssige epoxyfunktionelle Verbindungen (C-1) ausgewählt aus niedermolekularen Äthern von Glycidylalkohol mit ein- und mehrwertigen Phenolen, alkylsubstituierten Phenolen und ein- und mehrwertigen aliphatischen verzweigten und unverzweigten Alkoholen mit 2 bis 40 Kohlenstoffatomen sowie Versaticsäureglycidylester, zugesetzt wird.

2. Verfahren nach Anspruch 1, **dadurch gekennzeichnet, daß** das Epoxidharz (A) hergestellt wird durch Kondensation von Massenanteilen von 55 bis 85 % einer oder mehrerer Epoxidverbindung (en) mit einem Epoxidgruppengehalt von 300 bis 12 000 mmol/kg und 15 bis 45 % eines aromatischen Polyols.

3. Verfahren nach Anspruch 1, **dadurch gekennzeichnet, daß** zur Herstellung des Epoxidharzes (A) als zusätzliches Edukt in einem Massenanteil von 1 bis 25 % Verbindungen (A-3) eingesetzt werden mit mindestens zwei funktionellen Gruppen, die zur Reaktion mit Epoxidgruppen befähigt sind, und die nicht unter die aromatischen Polyole (A-2) fallen.

4. Verfahren nach Anspruch 1, **dadurch gekennzeichnet, daß** in den Edukten zur Herstellung des Kondensationsprodukts (B-1) das Verhältnis der Anzahl der OH-Gruppen in (B-11) zu der der Epoxidgruppen in (B-12) 1:0,5 bis 1:3,5 beträgt und der Epoxidgruppengehalt dieses Kondensationsproduktes (B1) zwischen 2,5 und 200 mmol/kg liegt.

5. Verfahren nach Anspruch 1, **dadurch gekennzeichnet, daß** das Dispergiermittel (B) zusätzlich ein nichtionisches Tensid enthält.

6. Verfahren nach Anspruch 1, **dadurch gekennzeichnet, daß** das Verdünnungsmittel (C) zusätzlich radikalisch polymerisierbare olefinisch ungesättigte Verbindungen (C-2) enthält, die ansonsten inert sind, und daß nach dem Dispergiervorgang durch Zugabe eines Initiators bei 60 bis 90 °C eine Emulsionspolymerisation durchgeführt wird.

7. Verfahren nach Anspruch 1, **dadurch gekennzeichnet, daß** die Epoxidverbindungen gemäß (A-1) und (B-12) unabhängig voneinander ausgewählt sind aus Polyglycidyläthern von mehrwertigen Alkoholen, Phenolen, hydrierten Phenolen und Novolaken sowie Polyglycidylestern von aliphatischen, cycloaliphatischen und aromatischen Polycarbonsäuren mit 2 bis 40 Kohlenstoffatomen mit einem Epoxidgruppengehalt zwischen 300 und 12 000 mmol/kg.

8. Verfahren nach Anspruch 1, **dadurch gekennzeichnet, daß** die aromatischen Polyole (A-2) ausgewählt sind aus zwei- und mehrwertigen ein- und mehrkernigen Phenolen, deren Halogenierungsprodukten, sowie Novolaken.

9. Verfahren nach Anspruch 3, **dadurch gekennzeichnet, daß** die Verbindungen (A-3) ausgewählt sind aus aliphatischen Polyaminen, Polyoxyalkylenmono- und -diaminen, aliphatischen und aromatischen Polycarbonsäuren mit 2 bis 60 Kohlenstoffatomen, und aliphatischen Polyolen.

10. Verfahren nach Anspruch 1, **dadurch gekennzeichnet, daß** die Verbindungen (B-11) ausgewählt sind aus Polyoxyalkylenglykolen mit gewichtsmittleren molaren Massen M_{w} von 600 bis 12000 g/mol.

11. Verfahren nach Anspruch 1, **dadurch gekennzeichnet, daß** die Verbindungen (C-2) ausgewählt sind aus den Estern von α,β-olefinisch ungesättigten Carbonsäuren mit aliphatischen Alkoholen mit 1 bis 18 Kohlenstoffatomen, Vinylaromaten, Vinylestern und Vinylhalogeniden, α,β-olefinisch ungesättigten Carbonsäuren sowie deren Amiden und Nitrilen.

12. Wäßrige Epoxidharz-Dispersion (I), herstellbar nach dem Verfahren eines oder mehrerer der Ansprüche 1 bis 11.

13. Wäßrige Beschichtungsmittel enthaltend eine Epoxidharz-Dispersion (I) nach Anspruch 12 und ein Härtungsmittel (II) ausgewählt aus Polyaminen, Mannich-Basen, Epoxid-Amin-Addukten mit freien Aminogruppen, Polyamidoaminen und latenten Härtungsmitteln.

14. Wäßrige Beschichtungsmittel nach Anspruch 13, **dadurch gekennzeichnet, daß** das Härtungsmittel (II) Aminwasserstoffatome aufweist, und daß die Anteile an Epoxidharz-Dispersion (I) und Härtungsmittel (II) so gewählt werden, daß das Verhältnis der Anzahl der zur Umsetzung befähigten Epoxidgruppen in (I) zur Anzahl der Aminwasserstoffatome in (II) zwischen 1:0.75 und 1:2,0 liegt.

15. Wäßrige Beschichtungsmittel nach Anspruch 13, **dadurch gekennzeichnet, daß** die latenten Härtungsmittel ausgewählt sind aus Harnstoff, Dicyandiamid, (substituiertem) Imidazol, (substituiertem) Imidazolin, Guanidin, Aceto- und Benzo-Guanamin.

16. Beschichtungen, hergestellt mit dem Beschichtungsmittel nach einem oder mehreren der Ansprüche 13 bis 15.

17. Wasserverdünnbare Klebstoffe, enthaltend wäßrige Dispersionen nach Anspruch 12.

## Claims

1. A process for preparing an aqueous epoxy resin dispersion (I), in which an epoxy resin (A) is prepared by condensing mass fractions of from 50 to 95% of one or more epoxy compounds (A-1) having at least two epoxide groups per molecule and from 5 to 50% of an aromatic polyol (A-2) at from 100 to 220°C in the presence of condensation catalysts,
then homogeneously incorporating a dispersant (B) comprising a condensation product (B-1) of an aliphatic polyol (B-11) having a weight-average molar mass (M_{w}) of from 200 to 20,000 g/mol and an epoxide compound (B-12) having at least two epoxide groups per molecule, and obtaining an aqueous dispersion by portionwise addition of water (D),
which comprises adding, prior to the dispersing step and at temperatures from 60 to 200°C, a diluent (C) comprising low molecular mass, liquid, epoxy-functional compounds (C-1) selected from low molecular mass ethers of glycidyl alcohol with monohydric and polyhydric phenols, alkyl-substituted phenols, and monohydric and polyhydric aliphatic branched and unbranched alcohols having from 2 to 40 carbon atoms, and also Versatic acid glycidyl esters.

2. The process as claimed in claim 1, wherein the epoxy resin (A) is prepared by condensing mass fractions of from 55 to 85% of one or more epoxide compounds having an epoxide group content of from 300 to 12,000 mmol/kg and 15 to 45% of an aromatic polyol.

3. The process as claimed in claim 1, wherein the epoxy resin (A) is prepared using, as additional reactant in a mass fraction of from 1 to 25%, compounds (A-3) having at least two functional groups which are capable of reacting with epoxide groups, said compounds being other than the aromatic polyols (A-2).

4. The process as claimed in claim 1, wherein in the starting materials for preparing the condensation product (B-1) the ratio of the number of OH groups in (B-11) to that of the epoxide groups in (B-12) is from 1:0.5 to 1:3.5 and the epoxide group content of this condensation product (B1) is between 2.5 and 200 mmol/kg.

5. The process as claimed in claim 1, wherein the dispersant (B) additionally comprises a nonionic surfactant.

6. The process as claimed in claim 1, wherein the diluent (C) additionally comprises free-radically polymerizable olefinically unsaturated compounds (C-2) which are otherwise inert and wherein after the dispersing operation an emulsion polymerization is conducted by adding an initiator at from 60 to 90°C.

7. The process as claimed in claim 1, wherein the epoxide compounds according to (A-1) and (B-12) are selected independently of one another from the group consisting of polyglycidyl ethers of polyhydric alcohols, phenols, hydrogenated phenols and novolaks and also polyglycidyl esters of aliphatic, cycloaliphatic and aromatic polycarboxylic acids having 2 to 40 carbon atoms, with an epoxide group content of between 300 and 12,000 mmol/kg.

8. The process as claimed in claim 1, wherein the aromatic polyols (A-2) are selected from dihydric and polyhydric mono- and polycyclic phenols, their halogenation products, and novolaks.

9. The process as claimed in claim 3, wherein the compounds (A-3) are selected from the group consisting of aliphatic polyamines, polyoxyalkylene mono- and diamines, aliphatic and aromatic polycarboxylic acids having 2 to 60 carbon atoms, and aliphatic polyols.

10. The process as claimed in claim 1, wherein the compounds (B-11) are selected from the group consisting of polyoxyalkylene glycols having weight-average molar masses M_{w} of from 600 to 12,000 g/mol.

11. The process as claimed in claim 1, wherein the compounds (C-2) are selected from the group consisting of the esters of α,β-olefinically unsaturated carboxylic acids with aliphatic alcohols having 1 to 18 carbon atoms, aromatic vinyl compounds, vinyl esters and vinyl halides, α,β-olefinically unsaturated carboxylic acids and their amides and nitriles.

12. An aqueous epoxy resin dispersion (I) preparable by the process of one or more of claims 1 to 11.

13. An aqueous coating composition comprising an epoxy resin dispersion (I) as claimed in claim 12 and a curing agent (II) selected from the group consisting of polyamines, Mannich bases, epoxy-amine adducts having free amino groups, polyamidoamines and latent curing agents.

14. The aqueous coating composition as claimed in claim 13, wherein the curing agent (II) contains amine hydrogen atoms and wherein the fractions of epoxy resin dispersion (I) and curing agent (II) are chosen such that the ratio of the number of reaction-capable epoxide groups in (I) to the number of amine hydrogen atoms in (II) is between 1:0.75 and 1:2.0.

15. An aqueous coating composition as claimed in claim 13, wherein the latent curing agents are selected from the group consisting of urea, dicyandiamide, (substituted) imidazole, (substituted) imidazoline, guanidine, acetoguanamine and benzoguanamine.

16. A coating produced with a coating composition as claimed in one or more of claims 13 to 15.

17. A water-dilutable adhesive comprising an aqueous dispersion as claimed in claim 12.

## Revendications

1. Procédé pour la préparation d'une dispersion aqueuse de résine époxyde (I) dans lequel on prépare une résine époxyde (A) par condensation de taux en poids
de 50 à 95 % d'un ou plusieurs composé(s) époxyde (s) (A-1) avec au moins deux groupes époxydes par molécule et
de 5 à 50 % d'un polyol aromatique (A-2) à une température de 100 à 220°C en présence de catalyseurs de condensation,
ensuite on incorpore par homogénéisation un agent dispersant (B) contenant un produit de condensation (B-1) d'un polyol aliphatique (B-11) ayant un poids moléculaire moyenne en poids (M_{w}) de 200 à 20000 g/mole et d'un composé époxyde (B-12) ayant au moins deux groupes époxydes par molécule et on obtient une dispersion aqueuse par ajout progressif d'eau (D),
**caractérisé en ce que**, avant l'étape de dispersion à une température de 60 à 200°C, on ajoute un agent diluant (C) renfermant un composé à fonction époxyde liquide de bas poids moléculaire (C-1) pris dans le groupe comprenant des éthers d'alcool glycidylique de bas poids moléculaire avec des phénols mono- et multifonctionnels, phénols substitués par un substituant alkyle et alcools mono- et multifonctionnels aliphatiques ramifiés et non ramifiés présentant 2 à 40 atomes de carbone, ainsi que des esters glycidyliques de l'acide versatique.

2. Procédé selon la revendication 1, **caractérisé en ce qu'**on prépare la résine époxyde (A) par condensation de taux en poids de 55 à 85 % d'un ou plusieurs composé(s) époxyde(s) ayant une teneur en groupes époxydes de 300 à 12000 mmoles/kg et de 15 à 45 % d'un polyol aromatique.

3. Procédé selon la revendication 1, **caractérisé en ce qu'**on utilise pour la préparation de la résine époxyde (A), en tant que matière de départ supplémentaire dans un taux en poids de 1 à 25 % des composés (A-3) ayant au moins deux groupes fonctionnels, qui sont capables de réagir sur des groupes époxydes et qui n'entrent pas dans le groupe des polyols aromatiques (A-2).

4. Procédé selon la revendication 1, **caractérisé en ce que** dans les matières de départ pour la préparation du produit de condensation (B-1), le rapport du nombre de groupes OH dans (B-11) aux groupes époxydes dans (B-12) est de 1:0,5 à 1:3,5 et la teneur en groupes époxydes présentée par ce produit de condensation (B1) est comprise entre 2,5 à 200 mmoles/kg.

5. Procédé selon la revendication 1, **caractérisé en ce que** l'agent dispersant (B) contient en plus un agent de surface non ionique.

6. Procédé selon la revendication 1, **caractérisé en ce que** l'agent diluant (C) contient en plus des composés à insaturation oléfinique polymérisables par voie radicalaire (C-2) qui sont par ailleurs inertes, et **en ce qu'**on met en oeuvre une polymérisation en émulsion, après l'opération de dispersion, par ajout d'un amorceur à une température de 60 à 90°C.

7. Procédé selon la revendication 1, **caractérisé en ce que** les composés époxydes selon (A-1) et (B-12) sont choisis indépendamment l'un de l'autre parmi les éthers polyglycidyliques d'alcools, de phénols, de phénols hydrogénés et de novolaques multifonctionnels ainsi que des esters polyglycidyliques d'acides polycarboxyliques aliphatiques, cycloaliphatiques et aromatiques présentant 2 à 40 atomes de carbone ayant une teneur en groupes époxydes comprise entre 300 et 12000 mmoles/kg.

8. Procédé selon la revendication 1, **caractérisé en ce qu'**on prend les polyols aromatiques (A-2) parmi les phénols mono- et polynucléaires bi- et multifonctionnels, leurs produits d'halogénation, ainsi que des novolaques.

9. Procédé selon la revendication 3, **caractérisé en ce qu'**on prend les composés (A-3) parmi les polyamines aliphatiques, les polyoxyalkylènemono- et -diamines, les acides polycarboxyliques aliphatiques ou aromatiques présentant 2 à 60 atomes de carbone et des polyols aliphatiques.

10. Procédé selon la revendication 1, **caractérisé en ce qu'**on prend les composés (B-11) parmi des polyoxyalkylèneglycols ayant un poids moléculaire moyenne en poids M_{w} de 600 à 12000 g/mole.

11. Procédé selon la revendication 1, **caractérisé en ce que** les composés (C-1) sont pris parmi les esters d'acides carboxyliques à insaturation oléfinique en α,β avec des alcools aliphatiques présentant 1 à 18 atomes de carbone, les composés vinylaromatiques, les esters vinyliques et les halogénures vinyliques, les acides carboxyliques à insaturation oléfinique en α,β ainsi que leurs amides et nitriles.

12. Dispersion aqueuse de résine époxyde (I) que l'on peut préparer selon le procédé de l'une ou plusieurs des revendications 1 à 11.

13. Agents de revêtements aqueux contenant une dispersion de résine époxyde (I) selon la revendications 12 et un agent durcisseur (II) pris dans le groupe comprenant des polyamines, des bases de Mannich, des adduits de résine époxyde-amine avec des groupes amino libres, des polyamidoamines et des agents durcisseurs latents.

14. Agents de revêtements aqueux selon la revendication 13, **caractérisés en ce que** l'agent durcisseur (II) présente des atomes d'hydrogène d'aminé et que les taux de dispersion de résine époxyde (I) et d'agent durcisseur (II) sont choisis de façon telle que le rapport du nombre des groupes époxydes capables de réagir dans (I) au nombre d'atomes d'hydrogène d'aminé dans (II) soient compris entre 1:0,75 et 1:2,0.

15. Agents de revêtement aqueux selon la revendication 13, **caractérisés en ce que** les agents durcisseurs latents sont pris dans le groupe comprenant l'urée, le diacyanodiamide, l'imidazole (substitué), l'imidazoline (substituée), la guanidine, l'acéto- et la benzoguanamine.

16. Revêtements préparés à l'aide de l'agent de revêtement selon une ou plusieurs des revendications 13 à 15.

17. Adhésifs diluables à l'eau, contenant des dispersions aqueuses selon la revendication 12.
